# EUROPÄISCHE PATENTANMELDUNG

(11) **EP 4 703 930 A1**
(43) Veröffentlichungstag der Anmeldung: **04.03.2026**
(21) Anmeldenummer: 24197339.5
(22) Anmeldetag: 29.08.2024
(51) Int. Cl.: G06F 21/57, G06F 21/64, H04B 5/77, H04L 9/32, H04L 9/40, H04W 12/10

(54) **GERÄT, EINGERICHTET, EINE ATTESTIERUNG BEREITZUSTELLEN**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Das Gerät (AEID) weist einen aktiven Betriebsmodus und einen passiven Betriebsmodus und einen im passiven Betriebsmodus auslesbaren Speicher (MEMO) auf und ist eingerichtet, im aktiven Betriebsmodus eine Attestierung (PDDIAtt) bereitzustellen und im Speicher (MEMO) zu speichern.

## Beschreibung

Die Erfindung betrifft ein Gerät, welches eingerichtet ist, eine Attestierung bereitzustellen.

Die Attestierung von Geräten spielt eine zunehmend wichtige Rolle in der IT-Sicherheit und im Gerätemanagement. Durch eine Attestierung kann die Integrität und Vertrauenswürdigkeit eines Geräts überprüft werden, indem Informationen wie die Geräteidentität, der Firmware-Stand und die Konfiguration in einer kryptographisch geschützten Form bereitgestellt werden. Dies ermöglicht es, die Echtheit und den Zustand eines Geräts zuverlässig zu verifizieren.

Bisher war die Attestierung von Geräten jedoch auf den aktiven Betriebszustand beschränkt. Das bedeutet, dass eine Attestierung nur dann durchgeführt und abgerufen werden konnte, wenn sich das Gerät in einem eingeschalteten und betriebsbereiten Zustand befand. Dies stellt ein Problem dar, insbesondere wenn Geräte transportiert, gelagert oder als Ersatzteile vorgehalten werden. In diesen Situationen befinden sich die Geräte typischerweise in einem ausgeschalteten oder energiesparenden Zustand, wodurch keine Attestierung möglich ist.

Das Fehlen einer Attestierungsmöglichkeit für inaktive Geräte erschwert die Überprüfung der Geräteintegrität entlang der Lieferkette oder vor der Installation. Ohne eine zuverlässige Methode zur Verifizierung des Gerätezustands im ausgeschalteten Zustand besteht ein erhöhtes Risiko für Manipulationen oder den Einsatz kompromittierter Geräte. Dies kann zu Sicherheitslücken und Integritätsproblemen in sensiblen Umgebungen führen.

Bisherige Ansätze zur Bereitstellung von Geräteinformationen im inaktiven Zustand, wie die Speicherung in externen Datenbanken oder die Verwendung von QR-Codes, bieten nicht den gleichen Grad an Vertrauenswürdigkeit und kryptographischem Schutz wie eine echte Attestierung. Diese Methoden sind anfällig für Manipulationen und können nicht garantieren, dass die bereitgestellten Informationen tatsächlich den aktuellen Zustand des Geräts widerspiegeln.

Somit ist es das Ziel der vorliegenden Erfindung, ein verbessertes Gerät bereitzustellen, das eine zuverlässige Attestierung auch im inaktiven Zustand ermöglicht. Darüber hinaus ist es das Ziel der vorliegenden Erfindung, ein Verfahren zur Bereitstellung einer Attestierung für ein inaktives Gerät zu schaffen. Zusätzlich ist es das Ziel der vorliegenden Erfindung, ein Prüfgerät bereitzustellen, das die Integrität eines inaktiven Geräts verifizieren kann.

Diese Aufgabe der vorliegenden Erfindung wird mit einem Gerät mit den in Anspruch 1 der vorliegenden Erfindung beanspruchten Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Gerät weist einen aktiven Betriebsmodus und einen passiven Betriebsmodus sowie einen im passiven Betriebsmodus lesbaren Speicher auf. Der Speicher ist dabei konfiguriert, um eine Attestierung im aktiven Betriebsmodus bereitzustellen und im Speicher zu speichern. Diese Konfiguration stellt sicher, dass das Gerät Attestierungsdaten auch dann aufrechterhalten kann, wenn es nicht aktiv mit Strom versorgt wird, wodurch die Sicherheit und Zuverlässigkeit in verschiedenen Betriebsumgebungen, wie z.B. während des Transports oder der Lagerung, erhöht wird.

Das erfindungsgemäße Gerät ermöglicht eine lückenlose Integritätsprüfung über den gesamten Lebenszyklus, einschließlich Phasen ohne aktive Stromversorgung. Dies kann die Sicherheit in Lieferketten und bei der Lagerung von Geräten deutlich verbessern. Durch die Möglichkeit der Attestierung im passiven Zustand können Manipulationsversuche oder unbefugte Änderungen am Gerät auch dann erkannt werden, wenn es längere Zeit außer Betrieb war. Die kryptografisch geschützte Attestierung im Speicher bietet zudem einen höheren Schutz vor Fälschungen als herkömmliche Methoden wie QR-Codes oder externe Datenbanken. Insgesamt trägt die Erfindung dazu bei, das Vertrauen in die Integrität und Authentizität von Geräten über ihren gesamten Lebenszyklus hinweg zu stärken.

Das Gerät kann ein loT-Gerät sein, was eine breite Anwendung über verschiedene internetverbundene Plattformen hinweg ermöglicht und damit die Nützlichkeit und Anpassungsfähigkeit des Geräts in modernen technologischen Ökosystemen erhöht.

Das Gerät kann einen Speicher umfassen, der aus nicht-flüchtigem Speicher, insbesondere Flash-Speicher und/oder ROM, und/oder batteriepuffertem Speicher besteht. Diese Funktion stellt sicher, dass die Attestierungsdaten intakt und gegen Stromausfälle oder Unterbrechungen geschützt bleiben, wodurch eine zuverlässige Verifizierungsmethode auch dann gewährleistet ist, wenn das Gerät nicht an eine Stromquelle angeschlossen ist.

Das Gerät kann einen Speicher haben, der über eine kabelgebundene Schnittstelle lesbar ist, insbesondere eine RS232- und/oder I2C- und/oder SPI- und/oder USB-Schnittstelle. Diese Funktion ermöglicht Flexibilität beim Zugriff auf die Attestierungsdaten über verschiedene gängige und sichere Kommunikationsprotokolle und erhöht so die Kompatibilität des Geräts mit bestehenden Technologien.

Das Gerät kann einen Speicher haben, der über eine drahtlose Schnittstelle zugänglich ist, insbesondere eine RFID- und/oder NFC- und/oder Bluetooth- und/oder Bluetooth Low Energy- und/oder WLAN-Schnittstelle. Diese drahtlose Zugänglichkeit erleichtert den einfachen und schnellen Zugriff auf die Attestierungsdaten ohne die Notwendigkeit physischer Verbindungen, was besonders nützlich ist in Szenarien, in denen sich das Gerät an einem schwer zugänglichen Ort befindet oder wenn eine minimale physische Interaktion gewünscht ist.

Das Gerät kann eine Attestierung speichern, die eine Rohattestation ist, und der Speicher ist konfiguriert, um bei Abfrage einen digitalen Verifizierungswert zu generieren, insbesondere unter Verwendung einer digitalen Signatur und/oder eines Message Authentication Codes und/oder eines Verifiable Credentials oder einer Verifiable Presentation. Diese Fähigkeit stellt sicher, dass die Attestierungsdaten zum Zeitpunkt des Zugriffs dynamisch verifiziert werden können, wodurch eine aktuelle Validierung der Integrität und Konfiguration des Geräts ermöglicht wird.

Das Gerät kann eine Attestierung umfassen, die einen Aktualitätswert enthält, insbesondere einen Nonce und/oder einen Zeitstempelwert und/oder einen Zählerwert. Diese Funktion hilft dabei, die Aktualität der Attestierungsdaten sicherzustellen und verhindert somit Replay-Angriffe und erhöht die Sicherheit des Attestierungsprozesses des Geräts.

Das Gerät kann eine Attestierung umfassen, die Identitätsinformationen über die Identität des Geräts und/oder Informationen über die Konfiguration des Geräts und/oder einen oder mehrere Firmware-Zustände des Geräts und/oder einen Lebenszykluszustand des Geräts und/oder einen Verifizierungswert, insbesondere einen Hash-Wert, von einer oder mehreren der vorgenannten Informationen enthält. Dieser umfassende Attestierungsinhalt ermöglicht eine detaillierte Überprüfung des Status und der Konfiguration des Geräts und erleichtert gründliche Integritätsprüfungen.

Das Gerät kann eine Attestierung umfassen, die Informationen über kryptographisches Schlüsselmaterial und/oder eine oder mehrere Berechtigungsnachweise des Geräts enthält.

Diese Einbeziehung kryptographischer Details in die Attestierung verbessert die Sicherheitsmaßnahmen, indem sie verschlüsselte Verifizierungsprozesse ermöglicht und dadurch die Attestierungsdaten vor unbefugtem Zugriff schützt.

Das Gerät kann konfiguriert sein, um die Attestierung während des Starts und/oder des Herunterfahrens und/oder periodisch und/oder auf Anfrage und/oder bei einer Änderung der Gerätekonfiguration bereitzustellen. Diese Flexibilität bei der Bereitstellung der Attestierung ermöglicht eine kontinuierliche Überwachung und Aktualisierung der Attestierungsdaten, wodurch sichergestellt wird, dass sie den aktuellen Zustand des Geräts genau widerspiegeln.

Das Gerät kann konfiguriert sein, um die Attestierung lokal zu generieren, vorzugsweise mit einem Sicherheitselement des Geräts und/oder einer Trusted Execution Environment des Geräts. Diese lokale Generierung der Attestierung erhöht die Sicherheit des Attestierungsprozesses, indem externe Abhängigkeiten und potenzielle Angriffspunkte minimiert werden.

Das Gerät kann konfiguriert sein, um die Attestierung zu überprüfen und dann, wenn eine Abweichung zwischen der attestierten Eigenschaft des Geräts und der tatsächlichen Eigenschaft des Geräts festgestellt wird, eine erneuerte Attestierung bereitzustellen. Diese Funktion stellt sicher, dass etwaige Diskrepanzen oder Änderungen in der Konfiguration oder im Zustand des Geräts umgehend adressiert und korrigiert werden, wodurch die Integrität des Geräts aufrechterhalten wird.

Das Gerät kann konfiguriert sein, um die Attestierung unter Verwendung mindestens eines Servers bereitzustellen, insbesondere eines Geräteverwaltungsservers und/oder eines Attestierungsservers. Diese serverbasierte Bereitstellung der Attestierung ermöglicht eine zentralisierte Verwaltung und Generierung von Attestierungen, was besonders bei großflächigen Einsätzen oder komplexen Systemen nützlich sein kann.

Das Gerät kann ein industrielles Gerät sein, insbesondere ein Steuergerät und/oder ein Fertigungsgerät und/oder ein Logistikgerät und/oder ein Wartungsgerät. Diese Spezifikation unterstreicht die Robustheit und Anwendbarkeit des Geräts in industriellen Umgebungen, in denen Zuverlässigkeit und Sicherheit von höchster Bedeutung sind.

### [Zusammenfassung der Erfindung]

Die vorstehende allgemeine Beschreibung der beispielhaften Ausführungsformen und die folgende detaillierte Beschreibung derselben sind lediglich exemplarische Aspekte der Lehren dieser Offenlegung und nicht einschränkend.

Nachfolgend wird die Erfindung anhand eines in der Zeichnung dargestellten Ausführungsbeispiele näher erläutert. Es zeigen:
- Abb. 1: ein Ausführungsbeispiel eines Geräteintegritäts-Attestierungssystems gemäß der vorliegenden Erfindung schematisch in einer Prinzipskizze,
- Abb. 2: ein weiteres Ausführungsbeispiel eines Geräteintegritäts-Attestierungssystems schematisch in einer Prinzipskizze, sowie
- Abb. 3: ein weiteres Ausführungsbeispiel eines Geräteintegritäts-Attestierungssystems schematisch in einer Prinzipskizze.

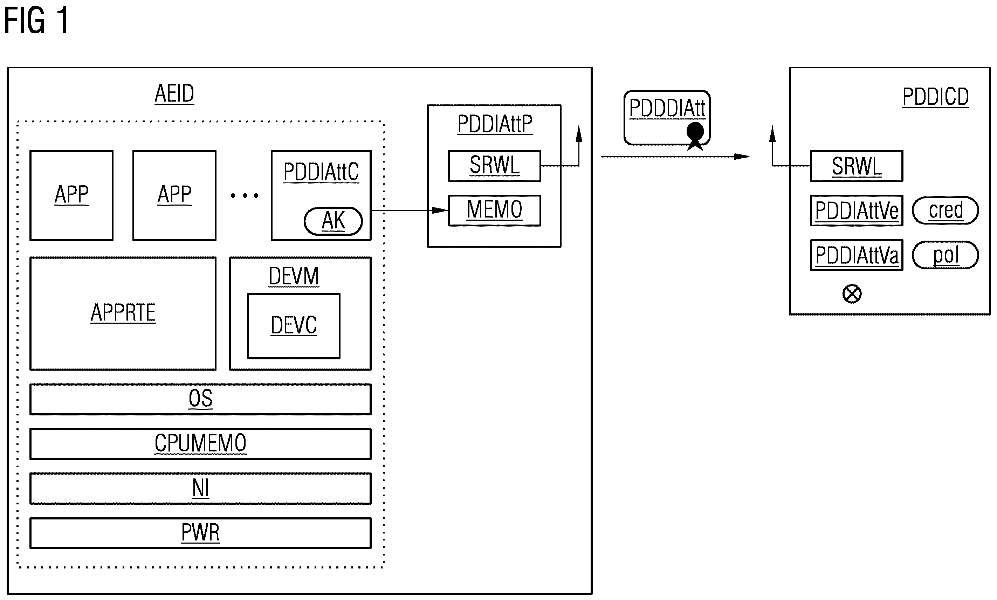

Das in Fig. 1 dargestellte Ausführungsbeispiel der Erfindung ist ein App-unterstüztendes loT-Gerät (App-Enabled loT Device) AEID, eine Geräteintegritäts-Attestierung PDDIAtt im passiven Betriebsmodus, d. h. vorliegend im heruntergefahrenen Zustand, (Power-Down Device Integrity Attestation). Zudem ist ein Geräteintegritäts-Prüfgerät PDDICD für den passiven Betriebsmodus (Power-Down Device Integrity Check Device) dargestellt.

Das App-unterstützende loT-Gerät AEID enthält mehrere Komponenten. Vorliegend umfasst das App-unterstützende loT-Gerät AEID eine Stromversorgungseinheit (Power Supply Unit) PWR, eine Netzwerkschnittstelle NI und einen CPU und einen Speicher CPUMEMO. Darüber hinaus umfasst das App-unterstützende loT-Gerät AEID ein Betriebssystem OS. Das Gerät umfasst zudem eine App-Laufzeitumgebung APPRTE, die mehrere Anwendungen APP und eine Geräteintegritäts-Attestiereinrichtung PDDIAttC umfasst. Die Geräteintegritäts-Attestiereinrichtung PDDIAttC verwendet im aktiven Betriebsmodus, d. h. im hochgefahrenen Zustand des App-unterstützenden loT-Geräts AEID einen Attestierungsschlüssel AK für kryptografische Operationen. Außerdem ist ein Geräteverwaltungsmodul (Device Management Module) DEVM mit einer Gerätekonfiguration DEVC des App-unterstützenden loT-Geräts AEID vorhanden.

Das App-unterstützende loT-Gerät AEID enthält als Komponente einen Geräteintegritäts-Attestierungsprovider PDDIAttP, der eine Kurzstrecken-Drahtlosschnittstelle SRWL und einen Speicher MEMO umfasst. Diese Komponente kann ohne externe Stromversorgung und im nicht betriebsbereiten Zustand des Geräts arbeiten. Der Geräteintegritäts-Attestierungsprovider PDDIAttP ist für die Speicherung der von der Geräteintegritäts-Attestiereinrichtung PDDIAttC erstellten Geräteintegritäts-Attestierung PDDIAtt verantwortlich. Die Geräteintegritäts-Attestierung PDDIAtt kann im Speicher MEMO gespeichert werden. Dazu ist der Speicher MEMO als nichtflüchtiger Speicher wie Flash oder MRAM oder als batteriegepufferter Speicher ausgebildet. Dies stellt sicher, dass die Geräteintegritäts-Attestierung PDDIAtt auch dann erhalten bleibt, wenn das App-unterstützende loT-Gerät AEID sich im heruntergefahrenen Zustand oder in einem Energiesparzustand befindet.

Die Netzwerkschnittstelle NI zum Auslesen der Geräteintegritäts-Attestierung PDDIAtt kann entweder kabelgebunden oder drahtlos sein. In einigen Fällen kann eine kabelgebundene Netzwerkschnittstelle NI wie RS232, I2C, SPI oder USB verwendet werden. In anderen Fällen kann eine drahtlose Netzwerkschnittstelle NI wie RFID, NFC, Bluetooth, Bluetooth Low Energy oder WLAN verwendet werden. Diese Flexibilität ermöglicht den Zugriff auf die Geräteintegritäts-Attestierung PDDIAtt in verschiedenen Szenarien, insbesondere dann, wenn das Gerät verpackt oder an einem Ort gelagert ist, an dem eine kabelgebundene Verbindung möglicherweise nicht praktikabel ist.

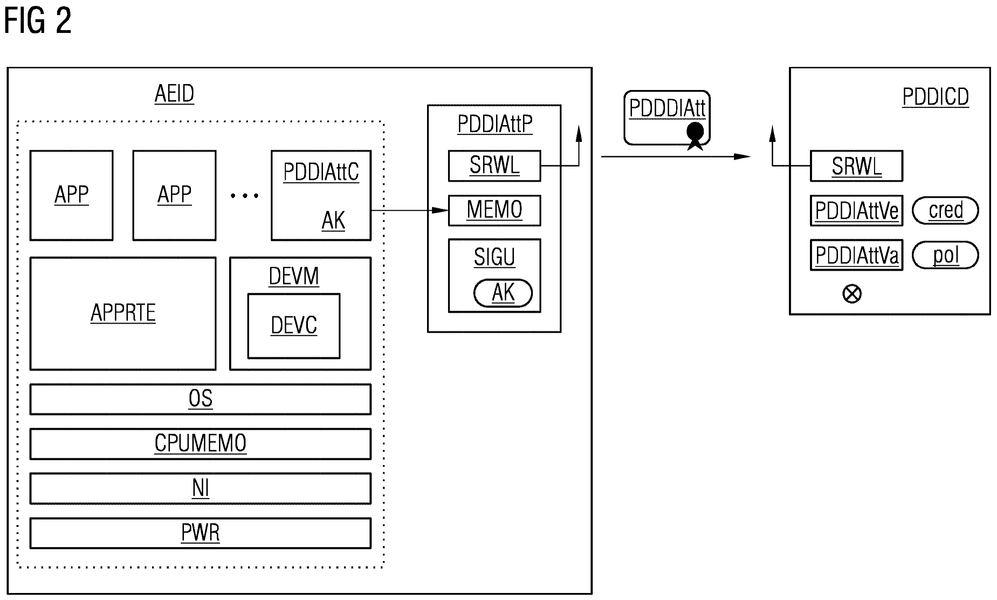

In Fig. 2 ist ein weiteres Ausführungsbeispiel des erfindungsgemäßen App-unterstützenden loT-Geräts AEID dargestellt, bei dem der Geräteintegritäts-Attestierungsprovider PDDIAttP gegenüber dem in Fig. 1 dargestellten Ausführungsbeispiel weiter modifiziert ist. Der Geräteintegritäts-Attestierungsprovider PDDIAttP umfasst als Netzwerkschnittstelle NI eine Kurzstrecken-Drahtlosschnittstelle SRWL, einen Speicher MEMO und eine Signatureinheit SIGU mit eigenem Attestierungsschlüssel AK. Der Geräteintegritäts-Attestierungsprovider PDDIAttP ist so konzipiert, dass er ohne externe Stromversorgung und bei nicht betriebsbereitem Zustand des AEID funktioniert. Dies ermöglicht es dem PDDIAttP, die Geräteintegritäts-Attestierung PDDIAtt auch dann zu speichern und bereitzustellen, wenn das App-unterstützende loT-Gerät AEID ausgeschaltet oder in einem Energiesparzustand ist.

Wie in Fig 2 dargestellt kann der Geräteintegritäts-Attestierungsprovider PDDIAttP auch eine Signatureinheit SIGU zur Erzeugung einer digitalen Signatur für die Geräteintegritäts-Attestierung PDDIAtt aufweisen. Diese digitale Signatur kann die Sicherheit zusätzlich erhöhen, indem sie die Integrität und Authentizität der Geräteintegritäts-Attestierung PDDIAtt zusätzlich gewährleistet.

In einigen Aspekten kann der Geräteintegritäts-Attestierungsprovider PDDIAttP eine digitale Signatur für die Geräteintegritäts-Attestierung PDDIAtt unter Verwendung des Attestierungsschlüssels AK in der Signatureinheit SIGU generieren. Diese digitale Signatur bietet kryptografischen Schutz für die Geräteintegritäts-Attestierung PDDIAtt und gewährleistet ihre Integrität und Authentizität. Die Geräteintegritäts-Attestierung PDDIAtt einschließlich der digitalen Signatur wird im Speicher MEMO des Geräteintegritäts-Attestierungsproviders PDDIAttP gespeichert. Die gespeicherte Geräteintegritäts-Attestierung PDDIAtt kann dann im heruntergefahrenen Zustand des App-unterstützenden loT-Geräts AEID über die Netzwerkschnittstelle NI, hier die Kurzstrecken-Drahtlosschnittstelle SRWL, des Geräteintegritäts-Attestierungsproviders PDDIAttP an das Geräteintegritäts-Prüfgerät PDDICD übermittelt werden.

In einigen Fällen kann die Geräteintegritäts-Attestierung PDDIAtt einschließlich der digitalen Signatur während des Betriebsmodus des AEID vollständig vorberechnet werden. Diese vorberechnete Geräteintegritäts-Attestierung PDDIAtt wird dann im Speicher MEMO des Geräteintegritäts-Attestierungsproviders PDDIAttP gespeichert und kann dem Geräteintegritäts-Prüfgerät PDDICD ohne weitere Berechnungen zur Verfügung gestellt werden. Dies ermöglicht eine schnelle und effiziente Bereitstellung der Geräteintegritäts-Attestierung PDDIAtt, gerade dann, wenn sich das App-unterstützende loT-Gerät AEID in einem heruntergefahrenen Zustand befindet.

In anderen Ausführungsformen, die in allen anderen Aspekten dem dargestellten Ausführungsbeispiel entsprechen, kann die Geräteintegritäts-Attestierung PDDIAtt bei Bedarf als gespeicherten Rohattestierung berechnet werden. In diesem Fall wird die Rohattestierung während in einem aktiven Betriebsmodus des App-unterstützenden loT-Geräts AEID im Speicher MEMO des Geräteintegritäts-Attestierungsproviders PDDIAttP gespeichert. Wenn die Geräteintegritäts-Attestierung PDDIAtt vom Geräteintegritäts-Prüfgerät PDDICD angefordert wird, berechnet der Geräteintegritäts-Attestierungsprovider PDDIAttP die Geräteintegritäts-Attestierung PDDIAtt einschließlich der digitalen Signatur aus der gespeicherten Rohattestierung. Dies ermöglicht die Erzeugung einer neuen Geräteintegritäts-Attestierung PDDIAtt bei jeder Anfrage und liefert so aktuelle Attestierungsinformationen.

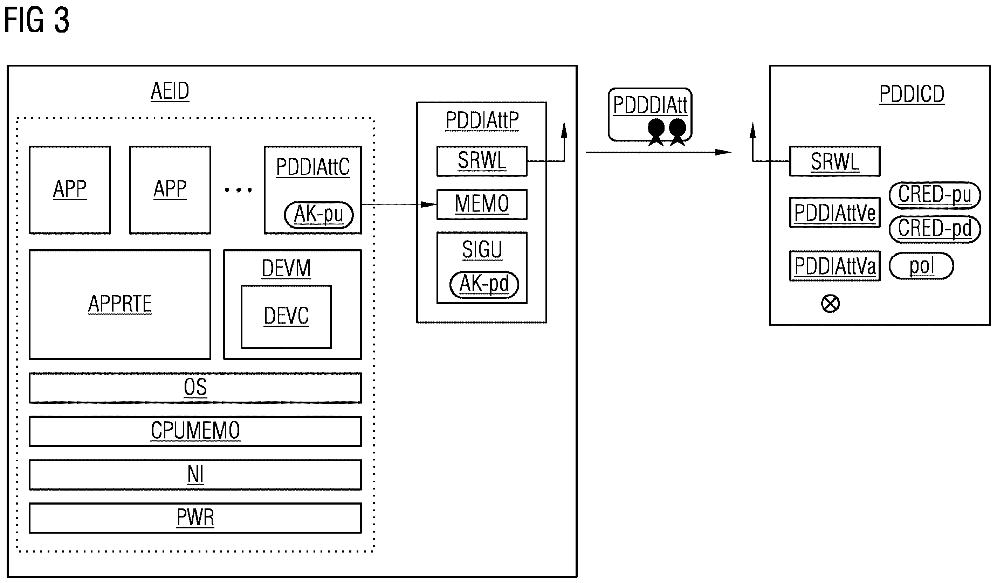

Bei dem in Fig. 3 dargestellten Ausführungsbeispiel sind wie in den vorhergehenden Ausführungsbeispielen ein App-unterstützendes loT-Gerät AEID und ein Geräteintegritäts-Prüfgerät PDDICD für den heruntergefahrenen Zustand vorgesehen. Im dargestellten Ausführungsbeispiel ist die Geräteintegritäts-Attestiereinrichtung PDDIAttC ausgebildet und eingerichtet, einen Aktivmodus-Attestierungsschlüssel AK-pu zu verwenden. Zudem ist wie in den vorhergehenden Ausführungsbeispielen ein Geräteintegritäts-Attestierungsprovider PDDIAttP vorhanden. Der Geräteintegritäts-Attestierungsprovider PDDIAttP umfasst eine Netzwerkschnittstelle NI in der Form einer Kurzstrecken-Drahtlosschnittstelle SRWL, einen Speicher MEMO und eine Signatureinheit SIGU mit einem Passivmodus-Attestierungsschlüssel AK-pd.

Im dargestellten Ausführungsbeispiel kann die Geräteintegritäts-Attestierung PDDIAtt durch zwei digitale Signaturen geschützt werden: eine digitale Signatur, die im aktiven Modus mit dem Aktivmodus-Attestierungsschlüssel AK-pu erstellt wird, und eine weitere digitale Signatur, die im passiven Modus mit dem Passivmodus-Attestierungsschlüssel AK-pd erstellt wird. Dieser doppelte Signaturprozess bietet eine zusätzlich erhöhte Sicherheit und gewährleistet die Integrität und Authentizität der Geräteintegritäts-Attestierung PDDIAtt sowohl im betriebsbereiten als auch im nicht betriebsbereiten Zustand des App-unterstützenden loT-Geräts AEID.

Das Geräteintegritäts-Prüfgerät PDDICD empfängt die Geräteintegritäts-Attestierung PDDIAtt. Das Geräteintegritäts-Prüfgerät PDDICD umfasst ebenfalls eine Netzwerkschnittstelle NI in der Art einer Kurzstrecken-Drahtlosschnittstelle SRWL für die Kommunikation mit den Geräteintegritäts-Attestierungsprovider PDDIAttP. Das Geräteintegritäts-Prüfgerät PDDICD umfasst zudem einen Geräteintegritäts-Attestierungsprüfer PDDIAttVe mit zugehörigen Aktivmodus- und Passivmodus-Credentials CRED-pu, CRED-pd sowie einen Geräteintegritäts-Attestierungsvalidierer PDDIAttVa mit einer Richtlinie pol für Validierungszwecke.

In weiteren Ausführungsbeispielen, die im Übrigen dem dargestellten Ausführungsbeispiel entsprechen, kann der Geräteintegritäts-Attestierungsprovider PDDIAttP auch einen Zeitstempel oder einen Nonce-Wert in die Geräteintegritäts-Attestierung PDDIAtt einbeziehen. Dieser Zeitstempel oder Nonce-Wert kann einen Hinweis auf die Aktualität der Geräteintegritäts-Attestierung PDDIAtt geben und so dazu beitragen, Replay-Angriffe zu verhindern. Der Zeitstempel oder Nonce-Wert kann während der Erstellung der Geräteintegritäts-Attestierung PDDIAtt im aktiven Betriebsmodus einbezogen und durch die mit dem Passivmodus-Attestierungsschlüssel AK-pu erstellte digitale Signatur zusätzlich geschützt werden.

## Patentansprüche

1. Gerät (AEID) mit einem aktiven Betriebsmodus und einem passiven Betriebsmodus und einem im passiven Betriebsmodus auslesbaren Speicher (MEMO), welches eingerichtet ist, im aktiven Betriebsmodus eine Attestierung (PDDIAtt) bereitzustellen und im Speicher (MEMO) zu speichern.

2. Gerät (AEID) nach dem vorhergehenden Anspruch, welches ein loT-Gerät ist.

3. Gerät (AEID) nach einem der vorhergehenden Ansprüche, bei welchem der Speicher (MEMO) einen nicht-flüchtigen Speicher, insbesondere einen Flash-Speicher und/oder einen ROM, und/oder einen batteriegepufferten Speicher umfasst.

4. Gerät (AEID) nach einem der vorhergehenden Ansprüche, bei welchem der Speicher (MEMO) mittels einer drahtgebundenen Schnittstelle (NI), insbesondere einer RS232- und/oder I2C- und/oder SPI- und/oder USB-Schnittstelle, auslesbar ist.

5. Gerät (AEID) nach einem der vorhergehenden Ansprüche, bei welchem der Speicher (MEMO) mit einer Drahtlosschnittstelle (SRWL), insbesondere einer FRID- und/oder NFC- und/oder Bluetooth- und/oder Bluetooth-Low-Energy- und/oder WLAN-Schnittstelle, auslesbar ist.

6. Gerät (AEID) nach einem der vorhergehenden Ansprüche, bei welchem die Attestierung (PDDIAtt) eine Rohattestierung ist, und der Speicher (MEMO) eingerichtet ist, bei Abfrage einen digitalen Prüfiniert, insbesondere mittels einer digitalen Signatur und/oder eines Message Authentication Codes und/oder eines Verifiable Credentials oder einer Verifiable Presentation, der Rohattestierung zu bilden.

7. Gerät (AEID) nach einem der vorhergehenden Ansprüche, bei welchem die Attestierung (PDDIAtt) einen Aktualitätswert, insbesondere eine Nonce und/oder einen Zeitstempelwert und/oder einen Zählerwert, umfasst.

8. Gerät (AEID) nach einem der vorhergehenden Ansprüche, bei welchem die Attestierung (PDDIAtt) eine Identitätsinformation zu einer Identität des Geräts und/oder eine Information zu einer Konfiguration des Geräts und/oder zu einem oder mehreren Firmwareständen des Geräts und/oder zu einem Lifecycle-Zustand des Geräts und/oder einen Prüfiniert, insbesondere einen Hashwert, einer oder mehrerer der vorgenannten Informationen umfasst.

9. Gerät (AEID) nach einem der vorhergehenden Ansprüche, bei welchem die Attestierung (PDDIAtt) eine Information zu kryptographischem Schlüsselmaterial und/oder einem oder mehreren Credentials des Geräts umfasst.

10. Gerät (AEID) nach einem der vorhergehenden Ansprüche, welches ausgebildet ist, die Attestierung (PDDIAtt) im aktiven Betriebsmodus mit einem ersten Prüfwert zu versehen und der Speicher (MEMO) ausgebildet ist, die Attestierung (PDDIAtt) bei einer Abfrage mit einem zweiten Prüfwert zu versehen.

11. Gerät (AEID) nach einem der vorhergehenden Ansprüche, welches eingerichtet ist, die Attestierung (PDDIAtt) beim Hochlauf und/oder beim Herunterfahren und/oder periodisch und/oder auf Anforderung und/oder bei Änderung der Gerätekonfiguration bereitzustellen.

12. Gerät (AEID) nach einem der vorhergehenden Ansprüche, welches ausgebildet ist, die Attestierung (PDDIAtt) lokal, vorzugsweise mit einem Sicherheitselement des Geräts und/oder einem Trusted Execution Environment des Geräts, zu bilden.

13. Gerät (AEID) nach einem der vorhergehenden Ansprüche, welches eingerichtet ist, die Attestierung (PDDIAtt) zu prüfen und dann, wenn eine Abweichung einer mit der Attestierten Eigenschaft des Geräts mit der tatsächlichen Eigenschaft des Geräts festgestellt wird, eine erneute Attestierung bereitzustellen.

14. Gerät (AEID) nach einem der vorhergehenden Ansprüche, welches eingerichtet ist, die Attestierung (PDDIAtt) mittels mindestens eines Servers, insbesondere eines Gerätemanagementservers und/oder eines Attestierungsservers, bereitzustellen.

15. Gerät (AEID) nach einem der vorhergehenden Ansprüche, welches ein industrielles Gerät, insbesondere ein Steuergerät und/oder ein Fertigungsgerät und/oder ein Logistikgerät und/oder ein Wartungsgerät ist.
